# EUROPEAN PATENT SPECIFICATION

(11) **EP 1 140 544 B1**
(45) Date of publication and mention of the grant of the patent: **24.07.2002**
(21) Application number: 99973400.7
(22) Date of filing: 22.11.1999
(51) Int. Cl.: B60K 17/346, B60K 17/35, F16H 48/20, F16D 47/06, F16D 35/00

(54) **MOTOR VEHICLE TRANSMISSION**
ANTRIEB FÜR KRAFTFAHRZEUG
TRANSMISSION POUR VEHICULE AUTOMOBILE

(30) Priority: 16.12.1998 GB 9827677
(43) Date of publication of application: 10.10.2001
(73) Proprietor: Land Rover Group Limited, St. Helier, Jersey JE4 9WG (GB)
(72) Inventor: SPOONER, John, Warwickshire CV8 2BX (GB); TICKLE, David, John, Warwickshire CV32 6BB (GB)
(74) Representative: Farrow, Robert Michael
(86) International application number: GB9903855
(87) International publication number: WO0035700

(56) References cited:
- EP-A- 0 391 722
- DE-A- 3 539 230
- US-A- 4 848 506
- US-A- 5 174 408
- US-A- 5 267 914
- US-A- 5 547 430
- US-A- 5 566 582
- US-A- 5 598 911
- US-A- 5 611 746

## Description

The invention relates to motor vehicle transmissions of the kind in which first and second rotary members are connected by a variable resistance coupling. Typically the variable resistance coupling comprises a speed dependant coupling device in which a torque transmitted by the coupling device increases with the relative rotation between a respective input member and a respective output member. Typically such speed dependant coupling devices are used in the transmissions of four wheeled drive vehicles where they may be used to control the action of a centre differential or be used in place of a central differential to transmit drive to one pair of wheels while the other pair of wheels are driven directly. Such speed dependant coupling devices, particularly viscous coupling units, have a limitation in that their characteristics are usually fixed so that when designing or choosing a variable resistance coupling there often has to be a compromise between various operating conditions of the vehicle, particularly when a vehicle is designed for both off-road and on-road use.

US-A-5 174 408 shows a motor vehicle transmission as defined in the preamble of both independent claims in which a variable resistance coupling comprises first and second viscous couplings and a freewheeling clutch connected together so that in normal use drive is transmitted through the first viscous coupling and the freewheeling unit and under abnormal conditions, including reversing and braking, the drive is transmitted through both viscous coupling with the freewheeling clutch overrunning. This arrangement can be of benefit when the vehicle is braking but it does not address the problem if providing a variable resistance coupling suitable for both off-road and on-road use, particularly as performance is reduced under conditions of vehicle reversing.

WO-A-98/55336 shows a transmission in which a variable resistance coupling is arranged to provide two resistance characteristics when operated in conjunction with a differential assembly. Whilst this arrangement is perfectly satisfactory if it is otherwise necessary or convenient to include such a differential assembly, this is not always the case, particularly if the transmission is of the kind in which no centre differential is required and the drive to one pair of wheels is through the variable resistance coupling.

The present invention seeks to provide a motor vehicle transmission including an improved variable resistance coupling and which avoids the disadvantages outlined above.

According to a first aspect of the invention there is provided a motor vehicle transmission including first and second rotary members connected by a variable resistance coupling which comprises first and second speed dependent coupling devices of the kind in which a torque transmitted by the coupling device increases with the relative rotation between a respective input member and a respective output member, the output member of the first coupling device being connected to the input member of the second coupling device so that the coupling devices are arranged in series, characterised in that a selector clutch is arranged to selectively couple together the input and output members of one of the coupling devices and is operatively linked to a transmission ratio selector means so that when the transmission is in a low ratio the selector clutch is engaged and when the transmission is in a high ratio the selector clutch is disengaged.

The invention also provides, according to a second aspect, a motor vehicle transmission including first and second rotary members connected by a variable resistance coupling which comprises first and second speed dependent coupling devices of the kind in which a torque transmitted by the coupling device increases with the relative rotation between a respective input member and a respective output member, the output member of the first coupling device being connected to the input member of the second coupling device so that the coupling devices are arranged in series, characterised in that a selector clutch is arranged to selectively couple together the input and output members of one of the coupling devices and control means are provided for operating the selector clutch, the control means being sensitive to vehicle road speed to engage the clutch when the vehicle is travelling below a predetermined road speed and to disengage the clutch when the vehicle is travelling above the predetermined road speed.

When the selector clutch is engaged to only one of the coupling devices is operational and the variable resistance coupling has a relatively low resistance whereas when the selector clutch is disengaged the coupling devices are operational in series and the variable resistance coupling has a relatively high resistance.

A transmission according to said first aspect of the invention may further comprising control means for operating the selector clutch, the control means being sensitive to vehicle road speed to engage the clutch when the vehicle is travelling below a predetermined road speed and to disengage the clutch when the vehicle is travelling above the predetermined road speed.

The first and second rotary members may be front and rear outputs of a centre differential arranged to drive front and rear wheels of a vehicle. Alternatively, The variable resistance coupling may be in an auxiliary driveline connected to an output shaft and arranged in use to transmit drive to wheels at one end of a vehicle and to transmit drive through the variable resistance coupling to wheels at the other end of the vehicle.

Conveniently, each speed dependent coupling device comprises a viscous coupling.

The invention also provides, in a third aspect, a variable resistance coupling for a motor vehicle transmission according to said first or second aspect.

The invention will now be described by way of example with reference to the accompanying drawings, of which:-
Fig.1 is a schematic diagram of a motor vehicle transmission according to the invention;
Fig.2 is a cross-section of a differential assembly incorporated in the transmission shown in Fig.1; and
Fig.3 is a cross-section of an alternative motor vehicle transmission according to the invention.

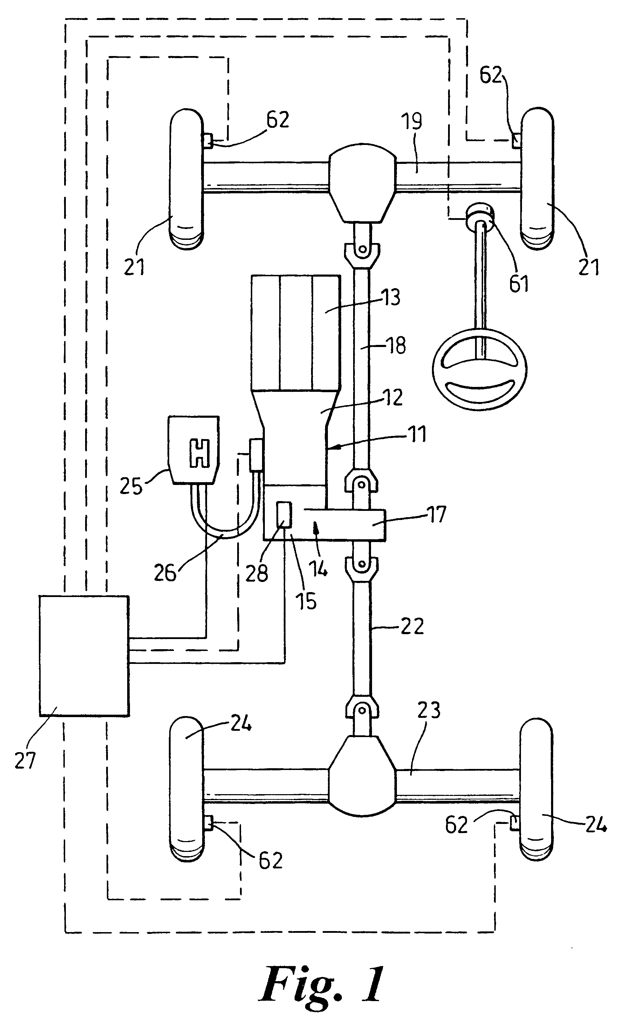

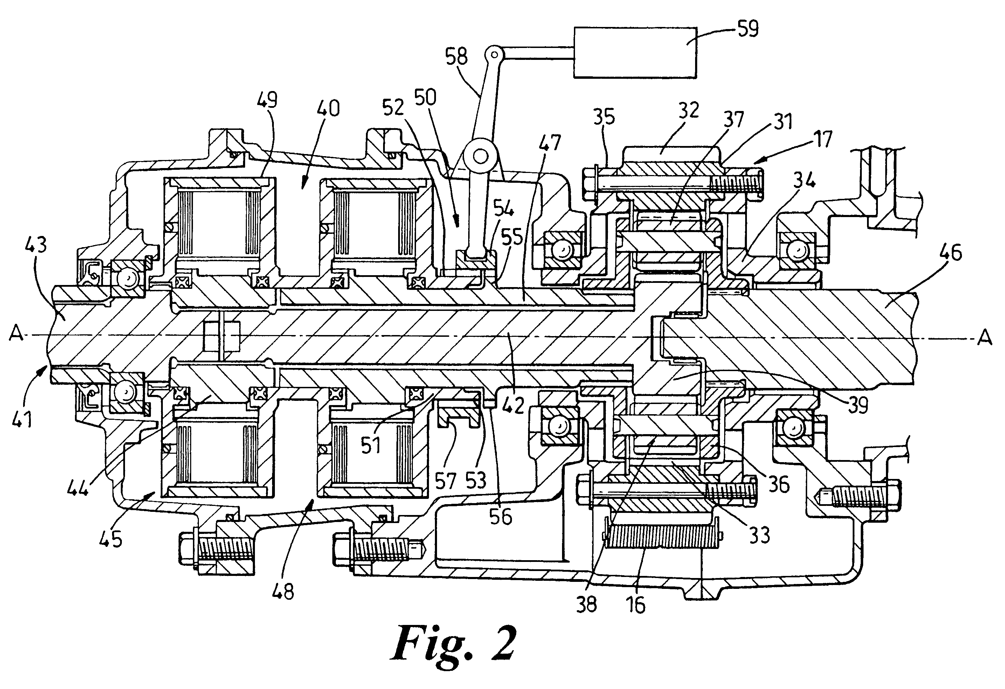

With reference to Figs.1 and 2, a transmission 11 for a four wheel drive vehicle includes a main gearbox 12 driven by an engine 13 and a transfer case 14. The main gearbox 12 is a conventional automatic transmission assembly providing a range of forward gear ratios between the engine 13 and the transfer case 14 where drive is transmitted through a range change gearbox 15 by a toothed chain 16 to a centre differential 17. A front propshaft 18 can transmit drive from the centre differential 17 to a front axle 19 carrying front road wheels 21 and a rear propshaft 22 can transmit drive from the differential assembly to a rear axle 23 carrying rear road wheels 24.

A gearbox selector 25 is connected by a Bowden cable 26 to the main gearbox 12 and is connected through an electronic control unit (ECU) 27 to an actuator 28 which effects ratio changes in the range change gearbox 15. The arrangement is generally as described in US-A-5 566 582.

The centre differential 17 has an annulus gear 31 having sprocket teeth 32 on its outer diameter for drive from the toothed chain 16 and internal gear teeth 33, the annulus gear being bolted between a pair of flanged rotary housing members 34 and 35. A carrier 36 is rotatably supported between the housing members 34, 35 within the annulus gear 31 and carries two sets of planet gears 37 and 38. Each planet gear 37 of the first set meshes with the gear teeth 33 of the annulus gear 31 and each planet gear 38 of the second set meshes both with a respective planet gear of the first set and with a sun gear 39.

The sun gear 39 is part of a front output shaft 41 which is connected to the front propshaft 18 and comprises a rear section 42 which includes the sun gear 39 and a front section 43, both sections 42 and 43 being splined to an inner hub 44 of a first viscous coupling 45. The carrier 36 is splined to a rear output shaft 46 which is connected to the rear propshaft 22 and to a hollow shaft 47 which forms the inner hub of a second viscous coupling 48.

Each viscous coupling 45, 48 is generally conventional, having a number of plates separated by a viscous fluid, some of the plates being connected to the respective inner hub 44, 47 and the other plates being connected to an outer rotary housing 49 which is common to both viscous couplings. Together the viscous couplings 45, 48 form part of a variable resistance coupling 40. A selector clutch 50 also forms part of the variable resistance coupling 40 and comprises a boss 51 extending from the outer housing 49 and having external splines 52 which mesh with internal splines 53 on a sleeve 54 which can slide axially on the boss but rotates with it. A flange 55 on the hollow shaft 47 has external splines 56 which match splines 52 and 53. The sleeve 54 has a circumferential groove 57 engaged by a forked lever 58 connected to an actuator 59 so that the sleeve 54 is axially moveable by the actuator between two positions, as will be described below.

In a first position as shown in Fig.2 above the axial centre line A-A, the sleeve 54 is positioned such that the sleeve splines 53 engage the splines 56 on the hollow shaft 47 to connect the viscous coupling outer housing 49 to the carrier 36. In this position the centre differential 17 is in a high resistance mode as will be explained below.

In a second position as shown in Fig.2 below the axial centre line A-A, the sleeve 54 is positioned such that the sleeve splines 56 are disengaged from the splines 56 on the hollow shaft 47 to disconnect the viscous coupling outer housing 49 from the hollow shaft. In this position the differential assembly is in a low resistance mode.

The centre differential 17 is conventional, the number of gear teeth 33 on the annulus gear 31 being twice the number of gear teeth on the sun gear 39 and the planet gears 37 and 38 having equal numbers of gear teeth. Drive is transmitted through the annulus gear 31 and both the carrier 36 and the sun gear 39 rotate at the same speed. If the rotational speed of the sun gear 37 increases by an amount ΔN above the speed of the annulus gear 31, e.g. due to wheel spin of one or both of the front wheels 21, then the speed of the carrier 36 decreases by a corresponding amount and the speed difference between the sun gear 37 and the carrier is 2.ΔN. When the centre differential 17 is in the high resistance mode, the first viscous coupling 45 alone is operational, whereas when the centre differential 17 is in the low resistance mode, the viscous couplings 45 and 48 are connected in series. The characteristics of the viscous couplings 45 and 48 are such that the torque reaction is directly proportional to the rotational speed difference between the respective hub 44, 47 and the outer housing 49 so that the resistance in the low resistance mode is half that in the high resistance mode.

The actuator 59 which moves the sleeve 54 is controlled by the ECU 27 so that when the range change gearbox 15 is in the higher of its two ratios the actuator 59 moves the lever 58 to select the low resistance mode of the centre differential 17 and when the range change gearbox is in the lower ratio the lever 58 is moved to select the high resistance mode. Hence selection of the appropriate mode is made according to the ratio selected in the range change gearbox 15, low resistance for on-road conditions and high resistance for off-road conditions.

Instead of separate actuators 28, 59 for the range change gearbox 15 and the centre differential 17, the lever 58 may be mechanically linked to the range change actuator 28. Indeed, if the range change gearbox 15 has a selector mechanism which is selected by a mechanical linkage under the direct control of the driver, the lever 58 may be mechanically linked to such a mechanism.

A steering angle sensor 61 which can transmit a steering angle signal to the ECU 27 may be used to enable automatic selection of the high resistance mode only when the steered wheels are substantially in the straight-ahead position. This would enable the use of a viscous coupling with greater torque/speed characteristics than normal.

Optionally, and particularly if the range change gearbox 15 is omitted, the centre differential 17 may be linked, either mechanically or electrically, to the gear shift mechanism 25 such that when the main gearbox 12 is in a low ratio the differential assembly is in the high resistance mode and when the main gearbox is in a high ratio the differential assembly is in the low resistance mode.

Alternative or additional controls are optionally available from road speed signals derived from road speed sensors 62 connected to the ECU 27. For example, the ECU 27 may operate to put the centre differential 17 in the low resistance mode when the vehicle is travelling above a predetermined road speed, conveniently referred to as the high/low mode threshold speed, and to put the differential assembly in the high resistance mode when the vehicle is travelling below the high/low mode threshold speed. Values of such threshold speeds would normally include a dead-band (hysteresis) to avoid hunting between modes.

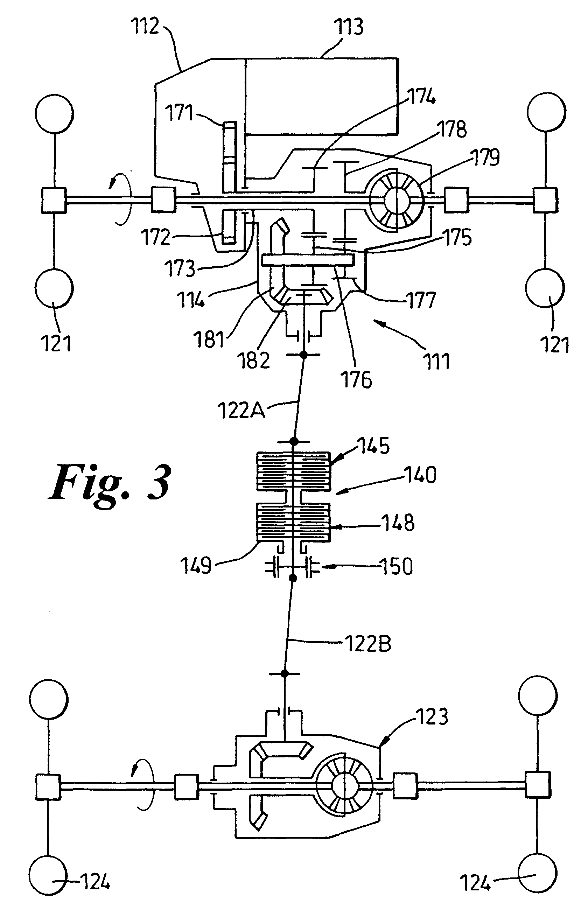

With reference to Fig.3, the alternative motor vehicle transmission is in many respects similar to the motor vehicle transmission shown in and described with reference to Figs.1 and 2 so that where appropriate the same reference numerals are used but with the addition of 100.

The transmission 111 is for a four wheel drive motor vehicle having a transverse engine 113 driving a main gearbox 112 which provides a range of forward gear ratios between the engine 13 and an intermediate reduction drive 114. Drive is transmitted from the gearbox 112 through gears 171, 172 to a hollow input shaft 173 and by gears 174, 175 to an output shaft 176. Gears 177, 178 transmit drive back to a front differential 179 which is coaxial with the hollow input shaft 173 and drives the front road wheels 121. An auxiliary driveline for the rear wheels 124 is provided by bevel gears 181, 182 which transmit drive from the output shaft 176 to a first rear propshaft 122A which in turn can transmit drive through a variable resistance coupling 140 to a second rear propshaft 122B to a rear axle 123. Such an arrangement is generally known, the variable resistance coupling 140 operating to transmit a torque to the rear wheels 124 to an extent which depends on the slip of the front wheels 121. See, for example, US 5 267 916.

The variable resistance coupling 140 is generally similar to the variable resistance coupling 40 and comprises a first viscous coupling 145 in series with a second viscous coupling 148. A common outer housing 149 can be connected to the inner hub of the second viscous coupling by a selector clutch 150. With the selector clutch 150 engaged, the viscous coupling outer housing 149 is directly connected to the second rear propshaft 122B and only the first viscous coupling 145 is operational .This puts the variable resistance coupling 140 in a high resistance mode. With the selector clutch 150 disengaged, the viscous coupling outer housing 149 is connected to the second rear propshaft 122B through the inner hub of the second viscous coupling so that both viscous couplings 145, 148 are operational in series and the variable resistance coupling 140 is in a low resistance mode in which the torque transmitted to the rear wheels 122 is half that in the high resistance mode.

The selector clutch 150 may be operated according to any of the methods discussed above with reference to Figs.1 and 2, allowing for the fact that a range change gearbox is not used in the transmission shown in Fig.3 but could be incorporated if required.

The viscous couplings 45, 48, 145, 148 could be replaced by other suitable speed dependant resistance devices, e.g. a 'Hydratrak' (Trade Mark) unit as illustrated by US-A-5 598 911 or a Gerodisc (Trade Mark) unit as illustrated by US-A-5 611 746.

Although in the motor vehicle transmissions described above with reference to Figs.1 and 2, the variable resistance coupling has been described with reference to its use with a centre differential to control torque between front and rear wheels, it can also be used with an axle differential to control torque between wheels on the same axle.

## Claims

1. A motor vehicle transmission (11; 111) including first and second rotary members (41, 46) connected by a variable resistance coupling (40; 140) which comprises first and second speed dependent coupling devices (45, 48; 145, 148) of the kind in which a torque transmitted by the coupling device increases with the relative rotation between a respective input member and a respective output member, the output member of the first coupling device being connected to the input member of the second coupling device so that the coupling devices are arranged in series, **characterised in that** a selector clutch (50; 150) is arranged to selectively couple together the input and output members of one of the coupling devices and is operatively linked to a transmission ratio selector means (25) so that when the transmission (11; 111) is in a low ratio the selector clutch is engaged and when the transmission is in a high ratio the selector clutch is disengaged.

2. A motor vehicle transmission (11; 111) including first and second rotary members (41, 46) connected by a variable resistance coupling (40; 140) which comprises first and second speed dependent coupling devices (45, 48; 145, 148) of the kind in which a torque transmitted by the coupling device increases with the relative rotation between a respective input member and a respective output member, the output member of the first coupling device being connected to the input member of the second coupling device so that the coupling devices are arranged in series, **characterised in that** a selector clutch (50; 150) is arranged to selectively couple together the input and output members of one of the coupling devices and control means are provided for operating the selector clutch (50; 150), the control means being sensitive to vehicle road speed to engage the clutch (50; 150) when the vehicle is travelling below a predetermined road speed and to disengage the clutch (50, 150) when the vehicle is travelling above the predetermined road speed.

3. A transmission (11; 111) according to claim 1 and further comprising control means for operating the selector clutch (50; 150), the control means being sensitive to vehicle road speed to engage the clutch (50; 150) when the vehicle is travelling below a predetermined road speed and to disengage the clutch (50; 150) when the vehicle is travelling above the predetermined road speed.

4. A transmission (11; 111) according to any preceding claim wherein the first and second rotary members are front and rear outputs (41 and 46) of a centre differential arranged to drive front and rear wheels (21 and 24; 121 and 124) of a vehicle.

5. A transmission (11; 111) according to any of claims 1 to 3 wherein the variable resistance coupling (40; 140) is in an auxiliary driveline connected to an output shaft (176) arranged in use to transmit drive to wheels (121) at one end of a vehicle and to transmit drive through the variable resistance coupling to drive wheels (124) at the other end of the vehicle.

6. A transmission (11; 111) according to any preceding claim wherein each speed dependent coupling device (45, 48; 145, 148) comprises a viscous coupling.

## Patentansprüche

1. Fahrzeug-Kraftübertragung (11; 111) mit einem ersten und einem zweiten Drehelement (41, 46), die über eine für variablen Widerstand ausgelegte Kupplung (40; 140) verbunden sind, die eine erste und eine zweite geschwindigkeitsabhängige Kupplungsvorrichtung (45, 48; 145, 148) in der Ausführung umfaßt, bei der ein von der Kupplungsvorrichtung übertragenes Drehmoment mit der relativen Drehung zwischen einem entsprechenden Eingangselement und einem entsprechenden Ausgangselement zunimmt, wobei das Ausgangselement der ersten Kupplungsvorrichtung mit dem Eingangselement der zweiten Kupplungsvorrichtung so verbunden ist, daß die Kupplungsvorrichtungen in Reihe angeordnet sind, **dadurch gekennzeichnet, daß** eine Wählkupplung (50; 150) so angeordnet ist, daß sie das Eingangselement und das Ausgangselement von einer der Kupplungsvorrichtungen selektiv miteinander koppelt und betriebswirksam mit einem Übersetzungsverhältniswählmittel (25) verbunden ist, so daß die Wählkupplung, wenn sich die Kraftübertragung (11; 111) in einem niedrigen Verhältnis befindet, eingerückt und, wenn sich die Kraftübertragung in einem hohen Verhältnis befindet, ausgerückt ist.

2. Fahrzeug-Kraftübertragung (11; 111) mit einem ersten und einem zweiten Drehelement (41, 46), die über eine für variablen Widerstand ausgelegte Kupplung (40; 140) verbunden sind, die eine erste und eine zweite geschwindigkeitsabhängige Kupplungsvorrichtung (45, 48; 145, 148) in der Ausführung umfaßt, bei der ein von der Kupplungsvorrichtung übertragenes Drehmoment mit der relativen Drehung zwischen einem entsprechenden Eingangselement und einem entsprechenden Ausgangselement zunimmt, wobei das Ausgangselement der ersten Kupplungsvorrichtung mit dem Eingangselement der zweiten Kupplungsvorrichtung so verbunden ist, daß die Kupplungsvorrichtungen in Reihe angeordnet sind, **dadurch gekennzeichnet, daß** eine Wählkupplung (50; 150) angeordnet ist, um das Eingangselement und das Ausgangselement von einer der Kupplungsvorrichtungen selektiv miteinander zu koppeln, und daß Steuerungsmittel für den Betrieb der Wählkupplung (50; 150) vorgesehen sind, wobei die Steuerungsmittel auf die Fahrzeugstraßengeschwindigkeit reagieren, um die Kupplung (50; 150) einzurücken, wenn sich das Fahrzeug unter einer vorbestimmten Straßengeschwindigkeit bewegt, und die Kupplung (50; 150) auszurücken, wenn sich das Fahrzeug über der vorbestimmten Straßengeschwindigkeit bewegt.

3. Kraftübertragung (11; 111) nach Anspruch 1, die weiterhin Steuerungsmittel für den Betrieb der Wählkupplung (50; 150) umfaßt, wobei die Steuerungsmittel auf die Fahrzeugstraßengeschwindigkeit reagieren, um die Kupplung (50; 150) einzurücken, wenn sich das Fahrzeug unter einer vorbestimmten Straßengeschwindigkeit bewegt, und die Kupplung (50; 150) auszurücken, wenn sich das Fahrzeug über der vorbestimmten Straßengeschwindigkeit bewegt.

4. Kraftübertragung (11; 111) nach einem der vorstehend aufgeführten Ansprüche, wobei es sich bei dem ersten und dem zweiten Drehelement um einen vorderen und einen hinteren Ausgang (41 und 46) eines Zentraldifferentials handelt, das so angeordnet ist, daß Vorder- und Hinterräder (21 und 24; 121 und 124) eines Fahrzeugs angetrieben werden.

5. Kraftübertragung (11; 111) nach einem der Ansprüche 1 bis 3, bei der die für variablen Widerstand ausgelegte Kupplung (40; 140) ein Hilfsantriebsstrang ist, der mit einer Ausgangswelle (176) verbunden und so angeordnet ist, daß er bei Gebrauch Antrieb auf Räder (121) an einem Ende eines Fahrzeugs und Antrieb durch die für variablen Widerstand ausgelegte Kupplung auf Räder (124) am anderen Ende des Fahrzeugs überträgt.

6. Kraftübertragung (11; 111) nach einem der vorstehend aufgeführten Ansprüche, bei der jede geschwindigkeitsabhängige Kupplungsvorrichtung (45, 48; 145, 148) eine Viskosekupplung umfaßt.

## Revendications

1. Transmission de véhicule automobile (11 ; 111) incluant un premier et un second membres rotatifs (41, 46) connectés par un accouplement à résistance variable (40 ; 140) qui comprend un premier et un second dispositifs d'accouplement dépendant de la vitesse (45, 48 ; 145, 148) du genre dans lequel un couple transmis par le dispositif d'accouplement s'accroît avec la rotation relative entre un membre primaire respectif et un membre secondaire respectif, le membre secondaire du premier dispositif d'accouplement étant connecté au membre primaire du second dispositif d'accouplement de façon que les dispositifs d'accouplement soient agencés en série, **caractérisée en ce qu'**un embrayage sélecteur (50 ; 150) est agencé pour coupler sélectivement ensemble les membres primaire et secondaire de l'un des dispositifs d'accouplement et est relié de façon opérationnelle à un moyen sélecteur de rapport de transmission (25) de façon que quand la transmission (11 ; 111) opère dans un rapport bas l'embrayage sélecteur est engagé et quand la transmission opère dans un rapport haut l'embrayage sélecteur est désengagé.

2. Transmission de véhicule automobile (11 ; 111) incluant un premier et un second membres rotatifs (41, 46) connectés par un accouplement à résistance variable (40 ; 140) qui comprend un premier et un second dispositifs d'accouplement dépendant de la vitesse (45, 48 ; 145, 148) du genre dans lequel un couple transmis par le dispositif d'accouplement s'accroît avec la rotation relative entre un membre primaire respectif et un membre secondaire respectif, le membre secondaire du premier dispositif d'accouplement étant connecté au membre primaire du second dispositif d'accouplement de façon que les dispositifs d'accouplement soient agencés en série, **caractérisée en ce qu'**un embrayage sélecteur (50 ; 150) est agencé pour coupler sélectivement ensemble les membres primaire et secondaire de l'un des dispositifs d'accouplement et un moyen de commande est prévu pour actionner l'embrayage sélecteur (50 ; 150), le moyen de commande étant sensible à la vitesse routière du véhicule de manière à engager l'embrayage (50 ; 150) quand le véhicule se déplace à une vitesse inférieure à une vitesse routière prédéterminée et à désengager l'embrayage (50 ; 150) quand le véhicule se déplace à une vitesse supérieure à la vitesse routière prédéterminée.

3. Transmission (11 ; 111) selon la revendication 1 et comprenant en outre un moyen de commande pour actionner l'embrayage sélecteur (50 ; 150), le moyen de commande étant sensible à la vitesse routière du véhicule de manière à engager l'embrayage (50 ; 150) quand le véhicule se déplace à une vitesse inférieure à une vitesse routière prédéterminée et à désengager l'embrayage (50 ; 150) quand le véhicule se déplace à une vitesse supérieure à la vitesse routière prédéterminée.

4. Transmission (11 ; 111) selon l'une quelconque des revendications précédentes, dans laquelle le premier et le second membres rotatifs sont les sorties avant et arrière (41 et 46) d'un différentiel central agencé pour entraîner les roues avant et arrière (21 et 24 ; 121 et 124) d'un véhicule.

5. Transmission (11 ; 111) selon l'une quelconque des revendications 1 à 3, dans laquelle l'accouplement à résistance variable (40 ; 140) est une transmission auxiliaire connectée à un arbre secondaire (176) agencé de manière à transmettre pendant l'utilisation l'entraînement directement aux roues (121) d'une extrémité d'un véhicule et à transmettre l'entraînement à travers l'accouplement à résistance variable aux roues motrices (124) de l'autre extrémité du véhicule.

6. Transmission (11 ; 111) selon l'une quelconque des revendications précédentes, dans laquelle chaque dispositif d'accouplement dépendant de la vitesse (45, 48 ; 145, 148) comprend un visco-coupleur.
